# EUROPEAN PATENT APPLICATION

(11) **EP 2 741 476 A1**
(43) Date of publication of application: **11.06.2014**
(21) Application number: 12008242.5
(22) Date of filing: 10.12.2012
(51) Int. Cl.: H04M 1/23, G06F 3/023, G06F 3/048, H04M 1/725, G06F 3/0488, G06F 3/0486, G06F 3/0362, G06F 3/0484, G06F 3/038

(54) **Mobile device and method of operation**

(71) Applicant: Telefonaktiebolaget L M Ericsson (publ), 164 83 Stockholm (SE)
(72) Inventor: Duboc, Stephane, 78990 Elancourt (FR)
(74) Representative: Burchardi, Thomas

(57) **Abstract**

The present invention relates to a mobile device (10) comprising a touchscreen (12) and at least one control element (14) separated from the touchscreen (12), and a method for operating such mobile device (10). Functions of the mobile device are selectively controlled when the control element (14) is actuated, wherein it is detected whether an area of the touchscreen (12) is touched, and when the area of the touchscreen (12) is not touched, a first function of the mobile device (10) is controlled, and when the area of the touchscreen (12) is touched, a second function of the mobile device (10) is controlled during the time in which the control element (14) is actuated and the area of the touchscreen (12) is touched. Thus, a switching capability between functions controlled by the control element (14) is provided.

## Description

### Technical Field

The present invention relates to a mobile device comprising a touchscreen and at least one control element separated from the touchscreen, and a method for operating such mobile device.

### Background

Mobile devices are available in a great variety, e.g. in the form of smartphones, personal digital assistants (PDAs), portable game consoles, tablet computers, laptop computers and the like. In many cases such mobile devices are equipped with a touchscreen, i.e. a display with a touch-sensitive surface allowing interaction with elements of a graphical user interface, GUI, of the mobile device.

Touchscreen technology as such is well known to the skilled person, for example based on capacitive, resistive, infrared or surface acoustic wave technology. Further, optical imaging technology for touchscreens is also known, wherein image sensors are placed around the screen for detecting touch events. An overview of such technologies is given under http://en.wikipedia.org/wiki/Touchscreen

Just as well, general GUI design for interaction with a touchscreen is known to the skilled person, as well as the definition of touch gestures, multitouch capabilities and the like.

Many of the above-mentioned mobile devices comprise a plurality of functions therein, for example telephone and/or data communication like electronic mail or web browsing, organizer functionality, office applications, entertainment functions, a camera and the like. Just as well, in many cases the touchscreen serves as the main, if not sole, input device; very often, only very few physical buttons are provided on the device, usually an on/off switch and/or a volume control switch. This also serves today's design preferences which are aiming at rather smooth and clean device surfaces. Further, having fewer interaction elements, and particularly fewer mechanical elements, may make device construction easier and less prone to failures.

However, due to the lack of physical buttons, for most interactions and also for changing of device settings the GUI of the mobile device must be used, which sometimes requires stepping deeply into menu structures or the like. This can be cumbersome e.g. for settings that may be desired to be adapted frequently, or for functions that would preferably be used "blind", i.e. without requiring hand-eye coordination as when using the touchscreen.

### Summary

The aim of the present invention is thus to provide a mobile device and a method of operating such a mobile device which maintains the above-mentioned advantages of having only few interaction elements, particularly mechanical elements, while at the same time mitigating the above disadvantages thereof.

This aim is achieved by the method and device of the independent claims.

Particularly, the invention provides a method for operating a mobile device, the mobile device comprising a touchscreen and at least one control element which is separated from the touchscreen. According to the method, functions of the mobile device are selectively controlled when the control element is actuated, wherein it is detected whether an area of the touchscreen is touched, and when the area of the touchscreen is not touched, a first function of the mobile device is controlled, and when the area of the touchscreen is touched, a second function of the mobile device is controlled during the time in which the control element is actuated and the area of the touchscreen is touched.

Further, the invention provides a mobile device comprising a touchscreen, at least one control element being separated from the touchscreen and at least one processor capable of selectively controlling functions of the mobile device. Therein, the at least one processor is capable of detecting whether an area of the touchscreen is touched, and, when detecting that the area of the touchscreen is not touched, controlling a first function of the mobile device, and when detecting that the area of the touchscreen is touched, controlling a second function of the mobile device during the time in which the control element is actuated and the area of the touchscreen is touched.

Further, the invention provides a computer program product which is capable, when executed by a processor of a mobile device, to execute the above method.

In the context of this invention, a touchscreen comprises a touch-sensitive input surface and a display, as explained in the introductory portion.

The above-mentioned control element can be of any type, for example a mechanical actuator, a capacitive interaction element or the like, or comprise such an actuator or interaction element.

The area of the touchscreen in which a touch is to be detected may be a predetermined confined area, may comprise substantially the whole touchscreen, or any area which is not used by interaction elements of a graphical user interface, GUI, of the mobile device. Alternatively, the area may be defined by an icon of the GUI depicting the second function.

### Brief description of the drawings

Further characteristics and advantages of the invention will become better apparent from the detailed description of particular but not exclusive embodiments, illustrated by way of non-limiting examples in the accompanying drawings, wherein:
Figure 1 is a schematic drawing of a mobile device;
Figure 2 is a schematic drawing of modules of a mobile device; and
Figure 3 is a flowchart of a control method.

### Detailed description

With reference to the figures, embodiments of the invention will be described in the following.

Fig, 1 shows a mobile device 10, which can for example be a smartphone, a PDA (personal digital assistant), a tablet computer or the like. The mobile device 10 comprises a touchscreen 12, which is understood to comprise a display and a touch-sensitive surface, and a control element 14 which is separate from the touchscreen,

Control element 14 can for example be or comprise a mechanical actuator, e.g. in form of a button, rocker switch, slider, control dial, jog switch or jog dial, scroll wheel or any combination thereof. It could also be or comprise an interaction element of any suitable technology, e.g. using capacitive technology. Control element 14 can for example primarily be a volume control for a loudspeaker 16 of the mobile device 10.

On the touchscreen 12, several exemplary icons, i.e. interaction elements of a graphical user interface (GUI) of the mobile device, are displayed.

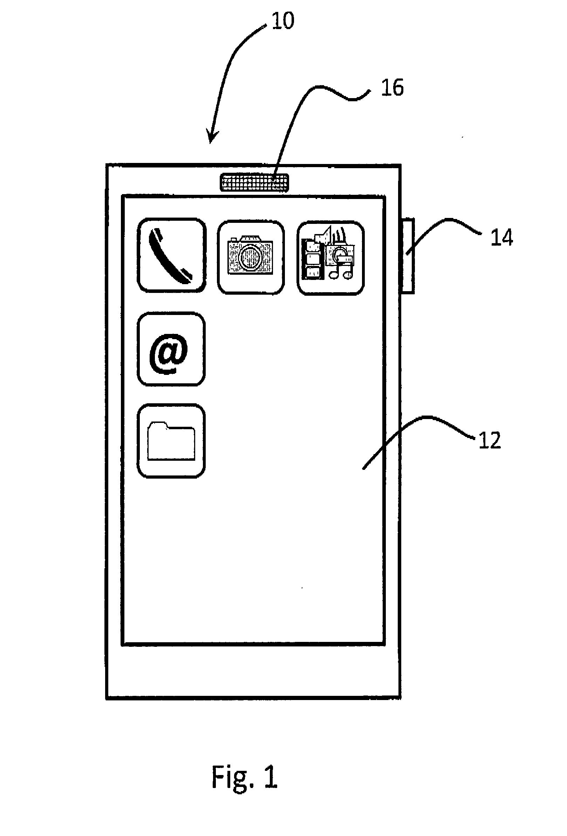

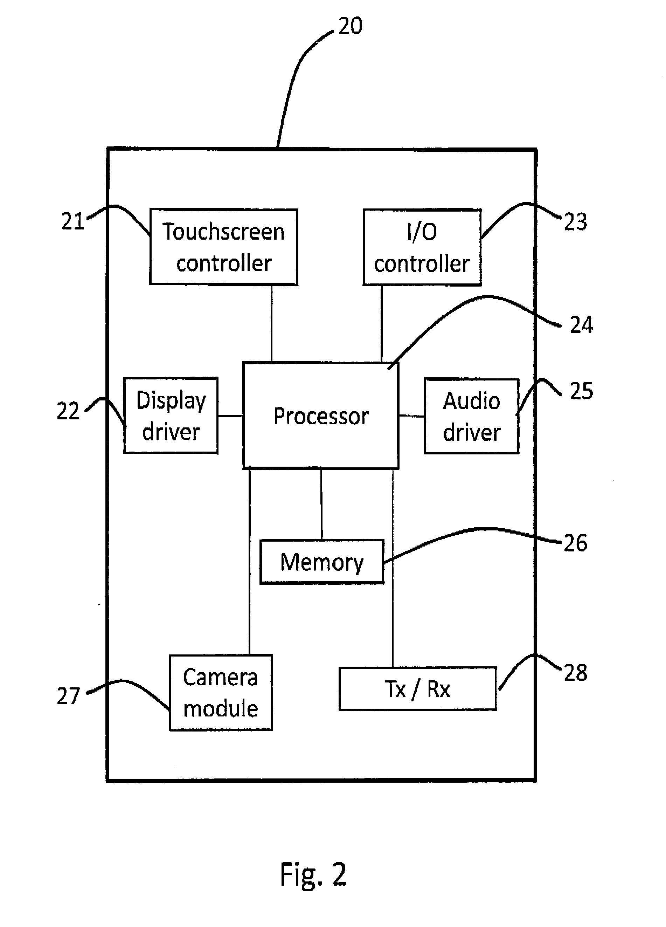

Further, mobile device 10 comprises one or more processor(s) (not shown in Fig. 1) which is/are capable of controlling the display of the touchscreen 12, processing user interactions with the touchscreen 12 and/or the control element 14, and other functions of the mobile device 10. Further, the processor(s) is/are capable of selectively controlling functions of the mobile device 10 when the control element 14 is actuated, and capable of detecting whether an area of the touchscreen 12 is touched. Examples for such processor(s) are given with reference to Fig. 2 below.

When it is detected that the area of the touchscreen 12 is not touched, a first function of the mobile device 10, for example volume control of the loudspeaker 16, is controlled, and when it is detected that the area of the touchscreen 12 is touched, a second function of the mobile device 10, for example brightness control of the display of the touchscreen 12, is controlled during the time in which the control element 14 is actuated and the area of the touchscreen 12 is touched.

Thereby, it is possible to assign more than one functionality to control element 14, wherein switching between these functionalities is done by touching an area of the touchscreen 12; if the area of the touchscreen 12 is not touched when the control element is actuated, a first or default functionality is executed, and as long as the area of the touchscreen 12 is touched and the control element 14 is actuated, a second or further functionality is executed.

The mentioned area of the touchscreen 12 may comprise substantially the whole touchscreen 12, and/or may be any area which is not used by interaction elements of a graphical user interface, GUI, of the mobile device 10, e.g, the icons shown in Fig. 1. Alternatively, the area may be defined by an icon depicting the second function which is displayed on the touchscreen 12.

Further, the touchscreen 12 may be capable of detecting a number of simultaneous touch events, and the processor(s) may be capable of controlling a function determined based on the detected number of simultaneous touch events.

Figure 2 shows a schematic drawing of modules of a mobile device 20, which may correspond to mobile device 10 of Fig. 1. The depicted elements may for example be placed on one or more printed circuit board(s) (PCB) inside the mobile device 20.

Exemplary mobile device 20 comprises a touchscreen controller 21 for controlling a touchscreen of the mobile device 20, e.g. touchscreen 12 as shown in Fig. 1, i.e. detecting and evaluating the touch events on the touchscreen. It further comprises a display driver 22 for controlling the display, which display is according to the definition used herein part of the touchscreen. Said display driver 22 is capable of providing signals to a display, i.e. controlling the content to be displayed, and/or may be capable of controlling properties of the display, e.g. brightness or color control or the like. Of course it is also conceivable that for some properties of the display other controllers or modules are comprised, like e.g. a backlight of an LCD display.

Further, mobile device 20 may comprise an Input/Output controller 23 which serves to connect peripheral devices and/or interfaces, like a USB interface. It is conceivable that a further control element which is separated from the touchscreen, e.g. control element 14 of Fig. 1, is connected via Input/Output controller 23. Of course it is also conceivable that the further control element is directly connected to processor 24 or a further controller or processor of mobile device 20.

Said processor 24 may be any type of multi-purpose or dedicated processor, and may also comprise or consist of several processors. Processor 24 is capable of processing input signals or data received via other controllers like touchscreen controller 21 and/or Input/Output controller 23, or from interfaces and/or control elements that are directly connected to processor 24.

Further, processor 24 may be capable of generating signals or instructions for other modules of mobile device like display driver 22 and/or audio driver 25. Said audio driver 25 may be capable of controlling audio devices integrated in or connected to mobile device 20, like a loudspeaker, e.g, loudspeaker 16 of mobile device 10, or a line out interface (not shown). Thus, processor 24 may be capable of selectively controlling e.g. volume of a loudspeaker and/or brightness of a display, as described above.

Any software which is to be executed on processor 24 and/or data that is to be processed by processor 24 may be stored on memory 26, which may be any type of volatile or non-volatile, removable or fixed memory as is well known to the skilled person.

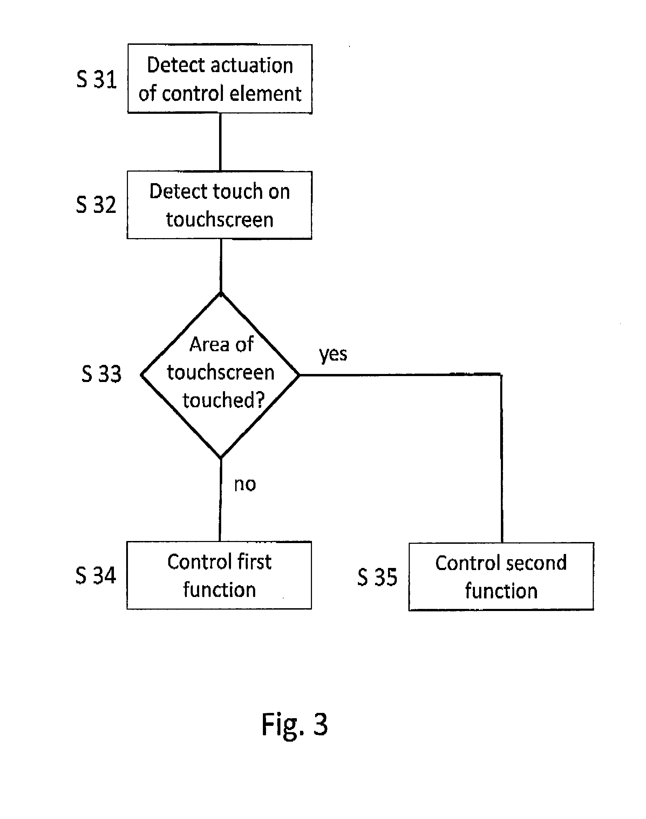

Thereby, processor 24 may be capable of executing a method as described below with respect to the flowchart of Fig. 3.

Mobile device 20 may further comprise a camera module 27, which may comprise or be connected to one or more optical elements like lenses or the like, an image sensor, e.g. of a CCD or CMOS type, and a processor or controller capable of controlling settings of the camera module, like zoom, focus, exposure and the like, and/or capable of pre-processing images or videos acquired by the camera module.

Said settings of camera module 27 may be controlled by the control element in accordance with the procedures and methods described herein.

Further, mobile device 20 may comprise a transceiver 28, capable of providing mobile communication capabilities to the mobile device. Transceiver 28 may for example be capable of communicating according to wireless communication protocols like the ones defined by 3GPP (Third Generation Partnership Project), like GSM, UMTS/WCDMA, LTE, or defined by other bodies like IEEE 802.11. It is understood that in such a case further modules, like a power amplifier, baseband processor, antenna etc. may be comprised in mobile device 20 as required for enabling communication according to said protocols. Thus, mobile device 20 may be operated as a mobile phone, or for mobile data communication.

Fig, 3 shows a method flow for operating a mobile device comprising a touchscreen and a control element which is separated from the touchscreen, e.g. for operating a mobile device 10 as shown in Figures 1 and/or 2.

In a step S 31, it is detected whether the control element is actuated; the control element can be of any type as described above. In a step S 32 it is detected whether the touchscreen is touched, and in step S 33 it is determined whether an area of the touchscreen is touched.

Said area of the touchscreen may comprise substantially the whole touchscreen, and/or may be any area which is not used by interaction elements of a graphical user interface, GUI, of the mobile device. Alternatively, the area may be defined by an icon depicting the second function which is displayed on the touchscreen.

If it is determined in step S 33 that the area of the touchscreen is not touched, the method proceeds to step S 34, controlling a first function of the mobile device. If it is determined in step S 33 that the area of the touchscreen is touched, the method proceeds to step S 35, controlling a second function of the mobile device.

The first and/or second functions may be any function of the mobile device, for example functions relating to settings of the mobile device like volume control of a loudspeaker, headphone or line out plug, or brightness control of the display of the mobile device, functions relating to certain modes of operation like zoom, focus and or exposure control in a camera mode, and/or functions relating to handling of applications or media like scrolling, skipping/fast forward/backward, but to name a few.

The determination of whether an area of the touchscreen is touched may comprise detecting whether any of a plurality of predefined areas of the touchscreen is touched, and controlling a function associated with the touched predefined area. For example, certain areas like the four quadrants of the touchscreen are associated with certain functions, or icons depicting the respective functions are displayed on the touchscreen. In this case it is conceivable that more than one such icon is displayed, providing for several selectable alternative functions.

Alternatively or in addition, determination of whether an area of the touchscreen is touched may comprise detecting a number of simultaneous touch events in the area, and controlling a second function determined based on the detected number of simultaneous touch events. For example, when one touch event is detected, a certain function is controlled and when two simultaneous touch events are detected, a different function is controlled.

It is also conceivable to "override" functions or application calls associated with icons displayed on the touchscreen when the control element is actuated and the touchscreen is touched. In such a case, a touch of an area of the touchscreen which is used by an interaction element of a graphical user interface, GUI, of the mobile device is detected and, when simultaneously or within a predefined time an actuation of the control element is detected, the second function of the mobile device is controlled during the time in which the control element is actuated and the area of the touchscreen is touched. I.e., not the usual function of the interaction element, like starting a certain application, is executed but rather the alternative function of the control element is controlled which does not need to have any relation to the interaction element.

Further, in the method described with respect to Fig, 3 as well as for the mobile devices shown in Fig. 1 or 2, the mobile device may be capable of providing several modes of operation, for example a mode in which it operates as a telephone, a mode in which it operates as a media player, e.g. as music or video player, a mode in which it operates as a camera etc.

In such a case, the aforementioned first and second functions may be dependent on the current mode of operation. For example, if mobile device is in telephone or media player mode, the first function may be volume control and the second function may be brightness control, as mentioned above. Alternatively, if the mobile device is in media player mode, the first function may be volume control and the second function may be track selection, fast forward/fast backward or the like. If, on the other hand, the mobile device is in camera mode, the first function may be zooming and the second function may be focus control or exposure control. Further, if the mobile device is in a mode in which textual or scheduler information is displayed, like in an organizer mode, in a web browsing mode or in an e-mail mode, one of the first and second functions may be scrolling, and the other one may be brightness control.

It is understood that these are only examples and that there are plenty of variations that can be applied, e.g. to define which and how many functions are provided in which mode of operation, which functions shall be used as a first function and which as a second function. Further the way of switching between a first function and a second function may be the same for different modes of operation or may be different for different modes of operation. For example, in telephone mode two functions may be provided, e.g. volume control and brightness control, and switching between those functions is provided by touching any area of the touchscreen, while in media player mode more than two functions are provided, e.g. start/stop, volume control and skip track/fast forward, and switching between those functions is dependent on how many simultaneous touch events are detected.

The described method may be used in or executed by a mobile device like one of mobile devices 10, 20 of Figs. 1 or 2. Particularly, steps of the method may be executed by processors or controllers as described with respect to Fig. 2.

Said method may be implemented by means of a computer program, which executes the method when executed by a processor of a mobile device, like processor 24 of mobile device 20. In this case, said computer program may be stored in a memory, like e.g. memory 26 of mobile device 20.

Clearly, several modifications will be apparent to and can be readily made by the skilled in the art without departing from the scope of the present invention. Therefore, the scope of the claims shall not be limited by the illustrations or the preferred embodiments given in the description in the form of examples, but rather the claims shall encompass all of the features of patentable novelty that reside in the present invention, including all the features that would be treated as equivalents by the skilled in the art,

## Claims

1. Method for operating a mobile device (10), the mobile device (10) comprising a touchscreen (12) and a control element (14) which is separated from the touchscreen (12), the method comprising
- when the control element (14) is actuated, selectively controlling functions of the mobile device (10),
wherein the selectively controlling functions of the mobile device (10) comprises
- detecting whether an area of the touchscreen (12) is touched,
- when detecting that the area of the touchscreen (12) is not touched, controlling a first function of the mobile device (10), and
- when detecting that the area of the touchscreen (12) is touched, controlling a second function of the mobile device (10) during the time in which the control element (14) is actuated and the area of the touchscreen (12) is touched,

2. The method of claim 1, wherein the area of the touchscreen (12) comprises substantially the whole touchscreen (12).

3. The method of claim 1 or 2, wherein the area of the touchscreen (12) is any area which is not used by interaction elements of a graphical user interface, GUI, of the mobile device (10).

4. The method of claim 1, wherein the area is defined by an icon depicting the second function which is displayed on the touchscreen (12).

5. The method of any of the preceding claims, comprising detecting whether any of a plurality of predefined areas of the touchscreen (12) is touched, and controlling a function associated with the touched predefined area.

6. The method of any of claims 1 to 3, comprising detecting a number of simultaneous touch events in the area, and controlling a second function determined based on the detected number of simultaneous touch events,

7. The method of any of claims 1 to 3, comprising detecting a touch of an area of the touchscreen (12) which is used by an interaction element of a graphical user interface, GUI, of the mobile device (10) and, when simultaneously or within a predefined time detecting an actuation of the control element (14), controlling the second function of the mobile device (10) during the time in which the control element (14) is actuated and the area of the touchscreen (12) is touched.

8. The method of any one of the preceding claims, wherein the first and/or second function of the mobile device (10) is/are dependent on a mode of operation of the mobile device (10),

9. The method of any one of the preceding claims, wherein the first or second function is a volume control of a loudspeaker of the mobile device (10).

10. The method of any of the preceding claims, wherein the second or first function is a brightness control of the touchscreen (12) of the mobile device (10).

11. Mobile device (10), comprising
- a touchscreen (12);
- a control element (14) being separated from the touchscreen;
- at least one processor, capable of selectively controlling functions of the mobile device (10) when the control element (14) is actuated;
wherein the at least one processor is capable of detecting whether an area of the touchscreen (12) is touched, and, when detecting that the area of the touchscreen (12) is not touched, controlling a first function of the mobile device (10), and when detecting that the area of the touchscreen (12) is touched, controlling a second function of the mobile device (10) during the time in which the control element (14) is actuated and the area of the touchscreen (12) is touched.

12. Mobile device (10) according to claim 11, wherein the touchscreen is capable of displaying an icon depicting the second function.

13. Mobile device (10) according to claim 11 or 12, wherein the touchscreen (12) is capable of detecting a number of simultaneous touch events, and wherein the at least one processor is capable of controlling a function determined based on the detected number of simultaneous touch events.

14. Mobile device (10) according to any of claims 11 to 13, wherein the control element (14) is or comprises a mechanical control element, particularly a mechanical actuator, more particularly a mechanical switching device.

15. Mobile device (10) according to any of claims 11 to 14, being capable of executing the method of any of claims 1 to 10.

16. Computer program product, being capable, when executed by a processor of a mobile device, to execute the method of any of claims 1 to 10,
